# EUROPEAN PATENT APPLICATION

(11) **EP 4 512 750 A1**
(43) Date of publication of application: **26.02.2025**
(21) Application number: 23192392.1
(22) Date of filing: 21.08.2023
(51) Int. Cl.: B65G 29/00, B65G 47/84

(54) **A FEEDING DEVICE FOR FEEDING AT LEAST ONE CONTAINER, A CONVEYOR SYSTEM AND A METHOD**

(71) Applicant: Körber Pharma, Inc., Gargo, ND 58102 (US)
(72) Inventor: Monson, Andrew, West Fargo, 58078 (US); Hein, Tyler, Fargo, 58102 (US)
(74) Representative: Müller Schupfner & Partner Patent- und Rechtsanwaltspartnerschaft mbB (Muc)

(57) **Abstract**

The present invention relates to a feeding device (10) for feeding at least one container (11), in particular for transporting containers (11) to a conveyor device, comprising: a first transport element (T1) configured to transport the containers (11) along a first path (P1) from a first infeed position (11) to a first out-feed position (O1); and a first guiding structure (G1) configured to guide the containers (11) along the first path (P1) from the first infeed position (11) to the first outfeed position (O1), while the containers (11) are transported by the first transport element (T1); wherein the first guiding structure (G1) comprises a ramp (12) with an inclination so that during transport along the first path (P1) at least two spatial coordinates of the containers (11) change between the first in-feed position (11) and the first outfeed position (O1).

## Description

The present invention relates to a feeding device for feeding at least one container, in particular for feeding at least one container to a conveyor device. The present invention further relates to a conveyor system including such a feeding device and a method for feeding at least one container to a conveyor device.

Feeding devices for containers are known in the prior art. Especially when transporting pharmaceutical containers such as ampoules, vials or small bottles, it is often necessary to change from a linear continuous object transport to a clocked transport or vice versa. For example, pharmaceutical containers to be inspected are removed in a timed manner from a container nest and transferred to a continuous conveying path. For this purpose, feeding devices are designed and used to perform such a transition from a clocked transport to a linear transport as quickly and efficiently as possible.

However, in some hand over cases it might be necessary to hand over containers in a specific manner e.g., in a specific orientation or relative spatial position. In this case there are no solutions known that may provide such specific hand over position while also securing a high throughput rate.

In view of the above, it is an object of the present invention to provide a feeding device for containers, in particular for transporting the containers to a conveyor device in multiple directions.

These and other objects, which become apparent upon reading the following description, are solved by the subject matter of the independent claims. The dependent claims refer to preferred embodiments of the invention.

According to a first aspect of the present invention, a feeding device for feeding at least one container to a conveyer may be provided, in particular for transporting container to a conveyor device. The feeding device may comprise: a first transport element configured to transport the container along a first path from a first infeed position to a first outfeed position; and a first guiding structure configured to guide the container along the first path from the first infeed position to the first outfeed position, while the container is transported by the first transport element; wherein the first guiding structure may comprise a ramp with an inclination so that during transport along the first path at least two spatial coordinates of the container change between the first infeed position and the first outfeed position.

The feeding device may be configured to allow a clocked transport of at least one container. The feeding device further allows a transition from the clocked transport of the containers to another type of transport, for example a linear transport. Transitions to other types of transport may be possible. The term clocked transport means that all the containers have the same distance from each other. Further, the feeding device may be configured to bring the at least one container in a specific position which may be advantageous in a next processing step. For example, in some cases, it may be necessary to grab a container at its top. In this case, the gripping device must be able to access the container at its top portion. The first outfeed position of the feeding device may be defined so as to readily grip the container there. The Conveyor may be provided with integrated grippers which may be configured to transport containers such as vials, bottles, or similar containers individually in three Dimensions. The feeding device may be configured to feed a plurality of containers in subsequent manner. Accordingly, a high throughput rate may be achieved.

The first transport element may be configured to transport the containers. In particular, the first transport element may be configured to transport the containers individually. The transport element is designed to move the containers along the first path. Different types of transport elements are possible for this purpose. It is possible, that the feeding device comprises more than the first transport element. In other words, the feeding device may comprise multiple transport elements. The multiple transport elements may be of the same type or different types. For example, the first transport element may be a star wheel or a screw. The screw element includes, for example, a thread to move the containers in a linear direction. In one embodiment, the first transport element is configured to guide at least one container along a guiding structure. That is, the container may be supported by a base and therefore does not need to be held by the transport element. As a result, the transport element does not need to grip the container, but only guide the container in a specific manner. Therefore, a high throughput rate may be realized. The containers may be guided along the first path by the first transport element. The first path allows a predefined movement of the containers. The first path may be the base on which the container stands. As the container rests on the first path, the container may be pushed and/or pulled and/or pushed across the first path by the first transport element. The first path may have a specific geometry. Accordingly, the container may be brought in a specific position by being transported along the first path. In particular, the container may be displaced in a vertical direction (i.e., in the direction of gravity). For example, the container may be displaced relative to the first transport element. Hence, the container may be readily gripped at the first outfeed position. The feeding device may comprise more paths besides the first path. The number of paths depends on the number of transport elements. The first path extends at least from the first infeed position to the first outfeed position.

The first infeed position is the position at which the at least one container is picked up by the first transport element. The first outfeed position is the position where the container leaves the first transport element.

The first guiding structure may be configured to guide the containers along the first path. The guiding structure may have a wall section. The wall section may cooperate with the first transport element in that the wall section prevents the containers from falling off the transport element. That is, the containers may be in contact with both the wall portion and the transport element. In other words, the wall section and the ramp may constitute a transport duct in which the containers may be transported by the first transport element. Thus, the transport element does not have to hold the container completely, but only exert a movement on the container so that the containers move along the guiding structure. The guiding structure may comprise the ramp with an inclination. The inclination may comprise a gradient. The gradient may be constant or variable. The geometry of the ramp may correspond to the geometry of the guiding structure. In operation, the containers may move on the ramp of the guiding structure. The ramp may support the container. The first guiding structure may be configured such that at least two spatial coordinates of the containers change while being transported from the first infeed position to the first outfeed position. This means that the containers may be moved in two directions. The spatial coordinates of the container may be defined in a coordinate system with three mutually orthogonal directions (X, Y and Z directions). The containers may be moved along their X-, Y-coordinates, X-, Z- coordinates, Y-, Z-coordinates or X-, Y-, Z-coordinates. In other words, the containers may be moved along a X-direction and a Y-direction, a X-direction and a Z-direction or a Y-direction and a Z-direction. For example, the containers may be moved so that the containers change the height with respect to their infeed position. It is possible that the containers rise or descend in one height direction. A gravity point of the container can be used as the reference point for determining the displacement of the container. However, any point on the container may be used as long as the reference point always rests on the same location on the container.

In contrast to the known prior art, the feeding device according to the invention enables the compensation of dimensional or directional changes of the container, in particular of height changes of the container. (i.e., a position of the container in the vertical direction). For this, the feeding device may comprise the guiding structure including the ramp. In other words, the ramp may be part of the guiding structure of the feeding device. The containers may move on the surface of the ramp from a bottom height, in particular the first infeed position, to a top height, for example the first outfeed position. By doing so, the containers may travel in a vertical direction to a desired height before being handed off to the conveyor device. More precisely, the containers may be moved such that at least two spatial coordinates change. It is possible for the container to travel. In other words, the containers may be moved vertically (i.e., in the direction of gravity) as they slide along the ramp. For example, the first transport element may transport each container so as to hold it in a plane. The first transport element may hold each container using a holding region. That is, a container held by the first transport via its holding region may be moveable in one direction. In other words, the container held by the transport element may be moveable only in one direction. Accordingly, the position of the container may be adapted in one direction (e.g., only in one direction) by means of the guiding structure.

In an embodiment, the ramp has an inclination so that three spatial coordinates of the containers between the first infeed position and the first outfeed position change during transport along the first path. That allows to move the containers in three directions. In particular, the containers may be moved in X-, Y- and Z-direction. This embodiment allows the containers to be moved in three directions. In addition, the ramp makes it possible that the position of the container may be changed relative to the transport element. In other words, the way in which the container is held by the transport element may be changed. This makes it possible to adapt the relative position of the container to the transport element to subsequent further processing of the container (e.g., transfer to a conveyor belt). This makes it possible to change a spatial position of the containers in any direction. In other words, position changes of the containers in horizontal direction as well as in vertical direction are possible. As a result, no individual gripping of each container e.g., by means of robot and so on is necessary and thus the throughput rate may be significantly increased.

In an embodiment, the feeding device comprises: a second transport element configured to transport the containers along a second path from a second infeed position to a second outfeed position, wherein the second transport element is arranged such that the first path and the second path are continuous, in particular connected to each other. The second transport element may be similarly configured as the first transport element. The second transport element may be configured to provide the containers such that the container may be easily taken over by the first transport element. The first path may be connected to the second path. This means that the second outfeed position and the first infeed position may be connected or coupled to each other. In other words, the second outfeed position and the first infeed position may be positioned at the same position. That is, the containers are passed from the second outfeed position of the second transport element to the first infeed position of the first transport element. The second transport element and the first transport element may be configured as a star wheel, respectively. In this case, the first transport element and the second transport element may have opposite directions of rotation. Accordingly, the feeding device may have a compact size and thus be operated in a small space. The second path may be configured substantially similarly to the first path. The paths may have a circular shape. In this way, the height position of the container may be sufficiently changed due to the longer distance as compared to a straight path. Alternatively, the second transport element may be different from the first transport element, for example, the second transport element may provide a different type of transportation, in particular, the second transport element may provide a linear type of transportation (e.g., a feed screw) and the first transport element may provide a circular type of transportation (e.g., a star wheel). For example, the second transport element may be configured to set the height and pitch of the container. As a result, the container may be easily received from the first transport element at the first infeed position. By providing the second transport element, a longer path (i.e., the first path and the second path) may be realized along which the containers are guided. Hence, the distance in which a position of the container may be adapted may be prolonged so as to properly adapt the height position of the container.

In an embodiment, the feeding device comprises a second guiding structure configured to guide the containers along the second path from the second infeed position to the second outfeed position; wherein the second guiding structure comprises a ramp with an inclination so that during transport along the second path at least two spatial coordinates or three spatial coordinates of the containers change between the second infeed position and the second outfeed position. This allows it to move the containers in at least two or three directions while being transported by the second transport element. The second guiding structure may be similarly configured as the first guiding structure.

The second guiding structure is configured to guide the containers along the second path. The second guiding structure comprises a ramp with an inclination. The inclination comprises a gradient. The gradient may be constant or variable. During operation of the feeding device, the containers move on the ramp along the second guiding structure. The second guiding structure is configured such that at least two spatial coordinates or three spatial coordinates of the containers change during transport from the second infeed position to the second outfeed position. This means that the containers may be moved in at least two or three directions. The containers may be moved along their X-, Y-coordinates, X-, Z- coordinates, Y-, Z-coordinates or X-, Y-, Z-coordinates. In other words, the containers may be moved along a X-direction and a Y-direction, a X-direction and a Z-direction, a Y-direction and a Z-direction or in all three directions.

In an embodiment, in an operation position of the feeding device, the second infeed position of the second transport element is arranged lower in a vertical direction than the first outfeed position. The term vertical direction here describes a direction parallel to the direction of gravity. Such an arrangement of the second transport element relative to the first transport element allows the containers to be picked up after a change in height by the first transport element. In addition, by changing the height position, the containers can be continuously moved to a position where they can be easily picked up by a conveyor.

In an embodiment, the first path and/or the second path is a linear path or a circular path. This means that the paths may comprise at least one circular geometry and/or one linear geometry. The geometries may extend in different spatial directions. Consequently, many different path geometries are possible. The geometry of the paths depends on the respective transport elements.

In an embodiment, the first transport element and the second transport element are a star wheel, respectively. The star wheel (i.e., a wheel element) can, for example, have recesses (holding regions) in which the containers are carried along and transported on the path or the paths. The screw element and the wheel element may be combined with each other. This means that the screw element and the wheel element may be arranged in series. The wheel element has the advantage that the outfeed position may be easily adapted by defining the position at which the container leaves the turning wheel. Analogously, the height position of the container may be defined by the outfeed position. This means a direction of the outfeed may be changed to almost any angle simply by pulling the container out of the wheel element at any angle relative to the respective infeed position. The screw element may be configured as a conveying screw. The screw element can be designed to provide a certain distance between the containers. The distance between the containers may be adjusted by the screw element in such a way that the containers may easily be picked up by a star wheel located downstream of the screw element. Accordingly, the distance between the holding regions of the star wheel may correspond to the pitch of the containers provided by the screw element at the outfeed position of the screw element (e.g., the third outfeed position).

Incorporating the screw element into the system allows implementing the system in any existing system. The screw element can provide a randomly provided stream of containers in a defined stream of containers with respect to the pitches of the containers (i.e., the spacing between the containers). According to one embodiment of the present invention a screw element and at least one wheel element, preferably two wheel elements, are provided. This way, it is possible to combine the features of both types of transport elements.

In an embodiment, the feeding device further comprises a third transport element configured to transport the container along a third path from a third infeed position to a third outfeed position, wherein the third transport element is arranged such that the first path the second path and the third path are continuous, in particular connected to each other. That is, the third transport element may be positioned at an upstream side of the device. Downstream of the third transport element the second transport element may be positioned. Downstream of the second transport element, the first transport element is positioned. The feeding device may be operated such that a container is transported from the upstream side to the downstream side (i.e., in a transport direction of the device). For example, the containers are delivered to the feeding device in a queue or line in which one container contacts the other container.

In an embodiment, the transport direction of the feeding device may be reversed. That is, the third transport element may be positioned at a downstream side of the device. Upstream of the third transport element, the second transport element may be positioned. Upstream of the second transport element, the first transport element may be positioned. The feeding device may be operated such that a container is transported from the upstream side, the first transport element, to the downstream side and to the third transport element. For example, the containers are delivered from a clip chain conveyor with gripping devices, for example to a flat belt conveyor, over at least the first transport element of the feeding device, preferably one after another, in particular in a clocked manner so that the containers do not contact each other. The containers may be discharged from the gripping devices of the clip chain conveyor by the reversed motion of the feeding device (e.g., by the first transport element). Alternatively or additionally, the containers may be discharged from the gripping devices by a guide or a similar element. Therefore, the feeding device may be configured to receive containers from a clip chain conveyor and/or hand off containers to a clip chain conveyor.

In an embodiment of the present invention, the screw element is used to initially move the containers at least in a linear direction. The screw element may comprise a thread that is configured to adjust the spacing i.e., pitch, of the containers. It is possible that the screw element is implemented in connection with a guiding structure such that the containers are also moved in a vertical direction by the guiding structure and the screw element. At the outfeed position of the screw element (i.e., at the third outfeed position), the containers are handed over to the wheel element, for example. The wheel element (i.e., the second transport element and/or the first transport element) then moves the containers at least on a circular path. The wheel element may have a guiding structure (i.e., the first guiding structure and/or the second guiding structure) to move the containers in a vertical direction. In conclusion, the container may be moved by the at least one transport element such that at least two spatial coordinates of the containers change during transportation on the respective paths of the at least one transport element.

In an embodiment, the screw element comprises a thread with an increasing gradient or pitch. This allows for a faster pickup rate and transport of the containers. Other variants may also be possible. For example, the thread of the screw element may have a thread with a constant pitch or gradient. The screw element may be configured to receive an arbitrarily configured stream of containers and to output the containers in a predefined manner. In the arbitrarily configured container stream, each container may be in contact with an adjacent container to push the container in front of it in the direction of transport. The predefined manner in which the container may be outputted by the screw element may be suitable for a further processing. For example, the containers may be outputted by the screw element so as to be received by a star wheel, for example. Accordingly, a predefined pitch of the containers is necessary which correspond to the distance between the holding regions of the star wheel.

In an embodiment, the first transport element and the second transport element are wheel elements. In this embodiment, the containers are each moved along a circular first path by the first transport element and along a circular second path by the second transport element. It is advantageous if both wheel elements rotate or move in opposite directions. This enables the containers to be transferred more easily from the first transport element to the second transport element. In this embodiment, the first guiding structure and/or the second guiding structure may comprise a ramp with an inclination through which at least two spatial or three spatial coordinates of the containers may be changed. In an embodiment, the third transport element is a screw element as described above.

In an embodiment, the first path and the second path are circular paths, wherein the first path and second path are connected so that the two paths form an S-shaped path. In this case, it is advantageous if the wheel elements move in opposite directions. In this way, the containers can be more easily transferred from the second transport element to the third transport element. In particular, a relatively long path along which the containers are moved may be formed in a confined space. In this way, sufficient displacement of the containers in the vertical direction may be ensured.

In an embodiment, the guiding structure comprise a guide element. The guide element may be an additional rail or border element, which may help so that the containers stay on the respective paths.

In an embodiment, the first transport element and the second transport element are driven by a single motor, in particular an electric motor. Alternatively, other types of motors may be used. Using only one motor to drive more transport elements may reduce the energy consumption and may thus improve the efficiency. For example, a gear mechanism may be provided to connect at least two transport elements to the one single motor.

In an embodiment, the first transport element and the second transport element are linked to each other by a drive mechanism. It is advantageous, when the first and second transport element are linked by the drive mechanism to the same motor. In this way, it is easier to synchronize the first transport element and second transport element during operation of the feeding device.

In an embodiment, the first transport element and the second transport element are linked to each other by a drive mechanism, in particular a belt-pulley assembly or by a gear assembly or by a combination of both. These are reliable and cost-effective measures to link the first and second transport element. Additionally, further transport elements may be linked using the above possibilities.

A further aspect of the present invention relates to a conveyor system for transporting containers. The conveyor system may comprise a feeding device according to any one of the above-described embodiments and a conveyor device, wherein the feeding device may be configured and arranged to hand off the containers to the conveyor device. The conveyer device (e.g., a transport device) may be a flat belt conveyer to further transport the containers. The transport device may be a plastic flexible link style chain conveyor. Accordingly, a conveyer could be provided with integrated grippers which is configured to individually transport the containers. Preferably the transport device is a clip chain conveyor. The transport device may be a clip chain conveyor, also known as the separation conveyor, which is a side-flexing conveyor using an endless chain as a traction mechanism. The clip chain conveyor is mainly used for transporting separate items. One gripping device may be assigned to one clip of the clip chain conveyor. The gripping device may hold a container individually. The clip chain conveyor may be freely routed and the containers may be properly held by the gripping device even when the clip chain conveyor is transporting the containers in sharp corners and/or with a steep elevation change. The container may be a pharmaceutical vial, an ampulla or the like. The container may have a bottom portion, a body, a neck and a cap. The cap may provide accessibility to the inside of the container. The body of the container may be provided between the neck and the bottom portion. The neck may be provided between the cap and the body. In an embodiment, the gripping device of the conveyor device is configured to hold one container (e.g., a vial and/or an at least partially round and/or cylindrical container element) in particular with a neck and a cap. In particular, the gripping device may hold the container at a neck thereof. Therefore, the neck of the container must be freely accessible for the gripping device in order to grip the container. In other words, no part of a transport element must constitute an obstacle for the gripping device. By providing the container in a position in which the container is displaced vertically, accessibility for the gripping device is ensured. Accordingly, the container can be easily gripped in the first outfeed position.

In an embodiment, the conveyor device comprises a gripping device, wherein the gripping device comprises: a support element configured to support the container, and a flexible element configured to grab the container. The gripping device is configured to interact with the container. The container may be a vial, a bottle or similar containers individually in 3 dimensions. Such containers are common in the pharmaceutical manufacturing, packaging industry and in the food industry. Other types of containers from the above-mentioned industries or other industries may be possible. It is also possible that the container is designed as a full body object. The support element is configured to support the gripping device by absorbing the weight of the container. That is, the support element may receive a force created by the weight of the container (e.g., a force directed in the direction of gravity). The support element may comprise a rigid material. Further, the support element may be configured to be directly or indirectly in contact with the container. In case the support element is directly in contact with the container, the load introduced by the container into the gripping device can be optimally supported or compensated. In case the support element is in indirect contact with the container, the support element may support the flexible element which may be in direct contact with the container. This provides the advantage that the flexible element may be adapted to the container in size and/or shape and may only partly be burdened by the load of the container. Thus, the durability of the whole system may be increased. The support element may be an inflexible element. The support element may be a rigid element. Accordingly, even heavy containers may be readily supported by the support element. The support element may not have any moveable or flexible parts. Therefore, the durability of the support element may be increased.

The flexible element is configured to grab the container. To do so, the flexible element may clamp around a part of the container. The part of the container which may be grabbed by the flexible element may correspond to the dimensions of the flexible element. The flexible element may be configured to grab and/or hold the container. Furthermore, the flexible element may apply a holding force to the container, when the container is grabbed. The holding force may be a restoring force of the flexible element. In other words, the support element may be the element for mainly supporting the container (e.g., the weight of the container). The flexible element may be configured to grab the container (e.g., to grab the container from a handoff position). For example, the handoff position may be a position where the gripping device take over a handling of a container. That is, the flexible element may grab the container and may guide the container to the support element. In other words, the flexible element may be configured to lead the container to a support position in which the support element may support the container. Accordingly, a proper position of the container in the gripping device could be secured.

Compared to the known prior art, the present invention is characterized in particular by the fact that the use of the gripping device according to the invention makes it possible to successfully grip and transport a container. Especially, the containers may be transported individually (i.e., each container may be handled alone without influencing other containers and without being influenced by other containers). The flexible element may provide a controlled holding force to gently hold the container during transport. Because of the gripping device, guides (e.g., continuous guides such as rails) along a conveyor are no longer required to maintain control of the containers and to prevent the containers from tipping over. The gripping device may passively hold a container, for example at a neck of the container. The gripping device may be compliant to a range of container diameters without the need to change parts along the gripping device and/or a conveyer. The location where the gripping device contact the container may be away from sensitive surfaces of the container, for example a cap of a vial. Therefore, various container cap designs may be handled by the gripping device. Because the containers are likely to contain a liquid, the containers might have a certain weight. The weight of the container is supported by the support element of the gripping device. As a result, the flexible element is relieved from supporting the weight of the container alone.

In an embodiment, the gripping device comprises a connection portion configured to connect the gripping device to a transport device. The connection portion may be configured to connect the gripping device to a further device. For example, the connecting portion may connect the gripping device to a conveyer (i.e., a transport device). Further, the connection portion may connect the gripping device to a robot handling container. The transport device may be a plastic flexible link style chain conveyor. Accordingly, a conveyer could be provided with integrated grippers which is configured to individually transport containers.

Preferably, the connection portion comprises at least one engaging element configured to connect the gripping device in a positive locking manner to the transport element. Accordingly, the gripping device may be mounted to the transport device without the use of tools or other instruments. Hence, the maintenance may be significantly facilitated. Hence, changeover maintenance may be significantly reduced. In particular, the gripping device may comprise two or more engaging elements. As a result, the gripping device may be fixed to the transport device such that it is properly held even by fast moving velocities and/or by transporting heavy containers.

Preferably the transport device is a clip chain conveyor. The clip chain conveyor, also known as the separation conveyor, is a side-flexing conveyor using an endless chain as a traction mechanism. The clip chain conveyor is mainly used for transporting separate items. One gripping device may be assigned to one clip of the clip chain conveyor. By holding a container individually, the clip chain conveyor can be freely routed and the containers can be properly held by the gripping device even when the clip chain conveyor is transporting the containers in sharp corners and/or with a steep elevation change. The connection portion may provide a connection in a positive locking manner. Alternative connection types, for example force-fitting connections, may be also possible. The container may be a pharmaceutical vial, an ampulla or the like. The container may have a bottom portion, a body, a neck and a cap. The cap may provide accessibility to the inside of the container. The body of the container may be provided between the neck and the bottom portion. The neck may be provided between the cap and the body.

In one embodiment of the present invention, the connection portion comprise a protrusion and/or a receptacle for fixing the gripping device to the transport device. Accordingly, the gripping device may be mounted to the transport device by interaction of the protrusion and/or the receptacle with a corresponding mounting portion of the transport device. In this way, the gripping device may be sufficiently fixed to the transport device without the need for use of tools.

In an embodiment, the connection portion comprises latching means to provide a clip connection. The clip connection may be a flexible clip connection, such that the connected gripping device may be movable in one or multiple directions, preferable in three dimensions. The clip connection allows an easy assembly the gripping device. For example, it may be possible to form a chain of gripping devices, that are connected to each other and/or to the transport device. Accordingly, a rigid system may be provided suitable for transporting heavy containers.

In an embodiment, the latching means comprise a latching element and a latching receptacle, which are configured to interact with each other. For example, the latching element may be a pin and the latching receptacle may be a corresponding retainer. The latching element and the corresponding latching receptacle provide an easy possibility to form the clip connection.

According to an embodiment of the present invention, the flexible element is configured to be moved with respect to the support element. In other words, the flexible element is deformable, wherein the support element is not deformable during a normal operation of the gripping device. Further, the flexible element may actively grab the container. The support element may be configured to passively hold the container. Further, the flexible element may be configured to actively hold the container. In summary, the flexible element may be an active element, whereas the support element may be a passive element.

According to an embodiment of the present invention, the flexible element is configured to be transferred between a receiving position and a holding position. The receiving position and the holding position may be different positions of the flexible element. The flexible element may be elastically deformable. In particular, the receiving position may be a deformed state of the flexible element. The holding position may be the non-deformed or initial position of the flexible element. The flexible element may be transferred between the two positions, by applying an external force onto the flexible element. The flexible element may be configured to automatically return to the holding position (e.g., by elastic properties of the flexible element and/or by a biasing force applied to the flexible element) when the flexible element is deformed toward the receiving position. That is, the flexible element may always tend to return to the holding position. Accordingly, the holding of the container can be secured independent of the state of surrounding systems.

Further, in the receiving position the flexible element may be configured to grab the container. The flexible element may be deformed to the receiving position by applying an external force onto the flexible element. For example, the container may be pressed against the flexible element, when the flexible element is in the holding position. In return, the flexible element may deform from holding position to the receiving position. For example, the flexible element may have a receiving space or receiving portion for receiving the container. In the holding position the receiving space is not accessible for the container. On the other hand, in the receiving position, the receiving space is accessible for the container. Once the container enters into the receiving space, the flexible element may automatically deform back to the holding position. During this deformation from the receiving position (e.g., also referred to as the open position), the container can be grabbed in the direction of the receiving space of the flexible element. Once the flexible element is in the holding position (e.g., also referred to as the closed position), the container may be held by the flexible element. In the holding position the container may not exit the receiving space. Thus, the container is held by the flexible element. In other words, in the holding position the flexible element is configured to hold the container.

In one embodiment, the flexible element comprises two holding arms. The two arms may be moveable with respect to each other. In the present case, movement of the arms may be considered as deformation of the flexible element. The arms may define the receiving space of the flexible element. The two arms may be moveable with respect to the support element. In the holding position, the holding arms may be substantially parallel to each other. Thus, the flexible element may exhibit a rigid structure in the holding position. Further, a sufficiently spaced receiving space is defined by the arms. Nevertheless, the flexible element may comprise more than two arms, for example 3, 4, 5 or more. Important is that the flexible element may grab the container using these arms. In addition, the holding arms may be moved towards each other and vice versa. Therefore, both arms may be moved by transition between the holding position and the receiving position. Preferably, the movement of the arms may be synchronized. For example, both arms may move between the both positions in the same amount and/or manner. As a result, a container may be smoothly grabbed and/or held by the flexible element.

In an embodiment, the flexible element may be arranged adjacent to the support element. In other words, the flexible element may be arranged directly adjacent (i.e., next to) to the support element. That means, no other component may be arranged between the support element and the flexible element. The flexible element may be in contact with the support element. Furthermore, the flexible element may be connected to the support element. This feature allows the support element to absorb the weight of the container and relieving the flexible element of said weight.

In an embodiment, the flexible element comprises two holding arms, which are connected by an elastic element, wherein the elastic element is configured to apply a holding force to the holding arms. The holding arms may be components of the gripping device, which are configured to be in direct contact with the container. The elastic element provides a simple means of applying a spring or restoring force to the flexible element. The elastic element of the gripping device may be integrated without any fastener, for example screws. The elastic element may be hooked to the holding arms. The elastic element may be configured to apply a restoring force to the flexible element in case the flexible element is deformed from the holding position. That is, the elastic element urges the flexible element towards the holding position. In other words, in the holding position the elastic element may not apply the restoring force to the flexible element. The holding arms may be connected to each other by the elastic element. Accordingly, the elastic element can provide a restoring force that urges the holding arms to move toward each other (i.e., into the holding position). In other words, in the holding position, the holding arms may be arranged closer to each other than in the receiving position. Accordingly, in the receiving position the container may be placed between the holding arms, whereas in the holding position the container is held between the arms. In addition, the flexible element may be configured to eject the container by a transition from the holding position to the receiving position in case a container is present between the holding arms. According, a container may be actively pushed out of the gripping device. The transition between the holding position and the receiving position may be initiated by applying an external force onto the flexible element. For example, the container may be pushed towards an outside of the flexible element and due to the pushing out function of the flexible element, the container may be advantageously ejected from the gripping device. Hence, a process speed may be increased while the process reliability is secured. In particular, the holding arms can be pivotably mounted at a mounting position on the gripping device. The mounting position may be at a tip end of the arms. Alternatively, the mounting position may be between the tip ends of each arm. In this case, the push out function of the holding arms can be increased.

In addition, the holding arms may have a curved portion. The curved portion may correspond to the outer shape of the container. Thus, the container may be sufficiently held by the flexible element (e.g., by the arms). Moreover, by providing the curved portion, the push out function may be improved.

In an embodiment, the elastic element comprises a spring, for example a screw spring, or a synthetic material, for example an elastomer. The screw spring may be easily adapted to the desired biasing force (dependent on the type of container to be transported). The synthetic material may be a low-maintenance part. Thus, the maintenance of the gripping device may be facilitated.

In an embodiment, each holding arm comprises a fitting portion configured to be fitted to the container to be grabbed. In other words, the recess forms a retainer for the container. The fitting portion may be provided additionally or alternatively to the curved portion. The fitting portion may comprise a soft and/or elastic material. The fitting portion may be in contact with a container held by the gripping device. The fitting portion may prevent a direct contact between the holding arms (the flexible element) and the container. Thus, the container may be prevented from being scratched by the holding arms. The fitting part may be a cushion for the support arms. This also helps prevent damage to fragile containers when handling them. The fitting portion may correspond to an outer shape of the container. This allows optimum adaptation to the gripped container.

In an embodiment, the flexible element and/or the support element comprises an at least partially rounded geometry. The at least partially rounded geometry may correspond at least partially to the container. Therefore, the container may be sufficiently received, grabbed and/or held by the gripping device. In addition, due to the rounded geometry the gripping device may have smaller dimensions. That is, the receiving space within the gripping device may be defined by the at least partially rounded geometry. As a result, the receiving space may be efficiently adapted to the actual size of a container to be transported.

In an embodiment, the gripping device is configured to hold a vial and/or an at least partially round and/or cylindrical container element, in particular with a neck and a cap.

In an embodiment, the gripping device comprises a guide element. The guide element may be configured to secure the container during transport thereof. This prevents errors and allows for a smoother operation. The guide element may be a ramp, wherein the slope of the ramp is ascending in a first direction which a container takes when it is grabbed by the flexible element. The ramp may be configured to come in contact with a container to be transported. That is, the container may be guided by the ramp into a proper position in which it can be gently held by the flexible element. For example, the ramp may help the container to pass protrusions or other elements which may disturb the grabbing of the container. Therefore, the container may be readily received by the gripping device. In a second direction taken by the container when it is ejected by the gripping device from the position in which it is held by the gripping device to a position in which it is not held by the gripping device, the ramp may include a wall portion (i.e., no ramp). That is, the second direction may be oriented opposite to the first direction. Accordingly, the container may be prevented from falling out of the gripping device. In particular, the wall portion can prevent the container from falling out only in certain positions of the container within the gripping device. For example, if the container is supported from below by a base, the container may be pushed upward so that it contacts the wall portion. In such a position, ejection of the container from the gripping device may not be possible. This can improve the pick-up situation of the container, as the container can be supported from below at a defined height in this situation. Due to the ramp of the guide element, the container may easily be picked up by the gripping device. The wall portion may effectively prevent the container from being ejected or falling down. As a result, the process step of picking up the container may be significantly improved in terms of error-proneness.

In an embodiment, the gripping device defines an interior space in which the container can be at least partially received. The interior space may be also referred to as the receiving space and vice versa (refer to the above outlined). The interior space may be at least partly surrounded by the flexible element. In this way the container may be gently held by the flexible element. The interior space may be configured to receive a cap of the container. Therefore, the cap of the container is securely received by the gripping device. In other words, the cap of the container, which is sometimes a sensitive part of the container, does not come into direct contact with the gripping device and is therefore not involved in holding the container. In addition, as the cap does not contribute to holding the container, the interior space allows the design of different container caps.

In an embodiment, the gripping device comprises an abutment for definition a position of the flexible element. The flexible element may have an equilibrium state in which no forces (e.g., internal elastic forces) act on the flexible element. Such equilibrium state may be the holding position of the flexible element. However, in some cases it may be desirable that the holding position may not be the equilibrium state of the flexible element. This may be desirable if in the holding position some elastic forces should be present to securely hold the container, for example. In this case an abutment may be provided which is configured to be a limit or stop for the deformation of the flexible element. In other words, the abutment may be configured to define the holding position of the flexible element. The holding arms may be in direct contact with the abutment in the holding position. As a result, heavy container may be sufficiently held by the gripping device.

In an embodiment, the gripping device comprises a top element. The upper element can cover the interior at its top. The top element may provide a connection between the support element and the flexible element on the one side and the connection portion on the other side. The guide element may be arranged at the top element. Therefore, the guide element may be in a proper position to guide a container. The top element may comprise a through hole for fixing the gripping device (i.e., the support element and the flexible element) to a transport device. In other words, the support element and the flexible element may be directly fixed to the transport device via the top element. Due to the through hole, the gripping device may be readily mounted to the transport device using available bolts or screws.

In a further aspect of the present invention, a transport assembly for transporting containers may be provided. The transport assembly may comprise at least two gripping devices according to any one of the embodiments above, wherein the gripping devices are connected to the transport device. The transport assembly of gripping devices may be alternatively described as a non-contact clip chain. The transport device may be a flexible link style chain conveyor. The gripping devices may be integrated with transport device. The transport assembly may be configured for transporting containers individually, in particular vials or bottles, preferably in three dimensions. The gripping devices are preferably made from a plastic material. The transport assembly provides a means to transport containers over and around obstacles without letting go of the container. During transportation of containers with the transport assembly, the containers do not contact each other. Therefore, a damage due to glass-on-glass contact may be prevented. Further, it is readily possible to transport containers in all three spatial directions. The transport assembly may further include a feeding device. The feeding device may be configured to bring the containers in a position which is suitable for the gripping device to grab the containers. As the gripping device may be configured to grip the containers between its cap and its body, the containers must preferably be positioned accordingly. In this way, the feeding device may be configured to hold the containers such that the upper part, preferably the upper third of the container, are arranged such that the gripping device may grab the container there. For example, the feeding device may be configured to change the vertical position of the container with respect to the feeding device. Consequently, the container may be sufficiently grabbed by the gripping device. Further, the transport assembly may comprise an unloading device. The unloading device may be configured to remove a container from a gripping device. The unloading device may comprise a guide wall or a baffle configured to redirect a container held by the gripping device. As a result, the container may be urged to exit the gripping device. In particular, an external force may be applied to the gripping device by the unloading device to eject the container. This allows the container to be easily released from the gripping device.

Preferable, the gripping devices are connected to the transfer device in a positive locking manner, in particular by the engaging element. Therefore, the gripping devices may be mounted and demounted from the transport device without the use of tools. Further, the gripping devices may be sufficiently held at the transport device.

Moreover, the gripping devices are moveable with respect to each other. For example, the gripping devices may be mounted to the transport device in a pivotable manner such that the gripping devices may be moveable with respect to the transport device. Accordingly, the gripping devices may be adapted to specific positions in which containers are to be received and/or ejected. In an embodiment, the transport assembly is configured to be flexible in three dimensions. In other words, the transport device may be movable horizontally, vertically and in curves. The transport assembly may be configured to transport the containers in three dimensions. This allows to easily bypass obstacles. Furthermore, transport assembly may be designed to be more compact as compared to known systems.

In an embodiment, the transport assembly comprises at least two types of gripping devices differing from each other. More precisely, the transport assembly may comprise a first gripping device configured to grab a first type of container and a second gripping device configured to grab a second type of container, wherein the first type of container and the second type of container have different geometries or dimensions, in particular different circumferences or diameters. Therefore, the transport device can be used to transport differently configured containers without the need for significant adjustments to the transport device. The two types of gripping device may be are arranged in an alternating manner. Therefore, the transport assembly may be easily implemented and adapted in an existing processing stream. For example, the first gripping device may be followed by the second gripping device, the second gripping device may be followed again by the first gripping device and so on. Other alternating orders of two or more types of gripping devices may also be possible.

In a further aspect of the present invention, a conveyor system may be provided. The conveyor system may comprise a transport assembly according to any one of the above-mentioned embodiments, a conveyor flight and a feeding device. The feeding device may be used to feed containers to the gripping devices of the transport assembly. The conveyor flight may be the part of the transport device configured for suspended transport of the containers.

A further aspect of the present invention may be a use of a container, in particular a vial or a bottle, with a gripping device according to one of the above-mentioned embodiments or with an assembly according to one of the above-mentioned embodiments or with a conveyor system according to the embodiment above. A further aspect of the present invention may be the use of a gripping device with a transport system, in particular a conveyor system.

According to a further aspect of the present invention a method for gripping a container is provided. The method may comprise contacting a container with a flexible element, grabbing the container with the flexible element, holding the container by a support element. That is, the flexible element may be deformed by contact with the container. By being deformed, the flexible element may be deformed from the holding position toward the receiving position. Once the receiving position is reached, the container may be received into the receiving or interior space. Then, the flexible element may be deformed so as to reach the holding position again. For this process the container may be pressed towards the flexible element by an external force. For example, the container may be transported towards the gripping device by a further transport device (e.g., a star wheel or a transport screw). For ejecting the container from the gripping device, an external force may be applied to the container. For example, the container may be transported along a baffle or wall which is inclined with respect to the transport direction of the container. Thus, the baffle or wall will apply a force onto the container. In return, the container may apply a force onto the flexible element which is then deformed from the holding position to the receiving position. Once the flexible element has reached the receiving position, the container may be ejected from the gripping device. This provides a simple system for individual transport of containers in all three spatial directions.

A further aspect of the present invention relates to a method for feeding containers to a conveyor device. The method may comprise the following steps:
moving at least one container from a first infeed position to a first outfeed position along a first path; while moving the container along the first path, adjusting the position of the container so as to change at least two spatial coordinates or three spatial coordinates of the at least one container; and handing off the container at the first outfeed position, in particular to the conveyor device.

In an embodiment, the method further comprises the step: moving at least one container from a second infeed position to a second outfeed position along a second path; handing over the container at the second outfeed position to the first transport element; while moving the containers along the second path, adjusting the position of the container so as to change at least two spatial coordinates or three coordinate of the container.

A further aspect of the present invention relates to a use of a container with a feeding device according to any one of the above-mentioned embodiments or with a conveyor system according to any one of the above-mentioned embodiments. Further, an aspect of the present invention relates to a use of the feeding device according to any one of the above embodiments for transporting of containers.

Features and embodiments may be combined with other features or other embodiments to form new embodiments. Advantages and embodiments of the features and embodiments also apply to the new embodiments. Advantages and embodiments explained in connection with the device apply mutatis mutandis to the method and vice versa.

In the following, the present invention is described exemplarily with reference to the enclosed figures, in which:
- Fig. 1: is a perspective view of a feeding device according to an embodiment of the present invention;
- Fig. 2: is top view of a transport element (screw element);
- Fig. 3a: is a top view a transport (a pair of wheel elements);
- Fig. 3b: is a top view of a guiding structures for a pair of wheel elements;
- Fig. 4a: is a schematic view of a drive mechanism of a feeding device;
- Fig. 4b: is another view of a drive mechanism of the feeding device;
- Fig. 4c: is another view of a drive mechanism of a feeding device;
- Fig. 5: is a perspective view of a conveyor system;
- Fig. 6: is a detailed perspective view of a wheel element;
- Fig. 7: is a detailed side view of a wheel element;
- Fig. 8: is a perspective view of an assembly of gripping devices;
- Fig. 9: is a perspective view of a bottom of a conveyor system; and
- Fig. 10: is a schematic view of two connected conveyors systems.

Notably, the figures are merely schematic representations and serve only to illustrate examples of the present disclosure. Identical or equivalent elements are in principle provided with the same reference signs.

To facilitate an understanding of embodiments, principles, and features of the present disclosure, they are explained hereinafter with reference to implementation in illustrative embodiments. In particular, they are described in the context of being a feeding device for containers, in particular for containers for pharmaceutical purposes, a conveyor system with such a feeding device and a method. Embodiments of the present disclosure, however, are not limited to use in the described systems or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

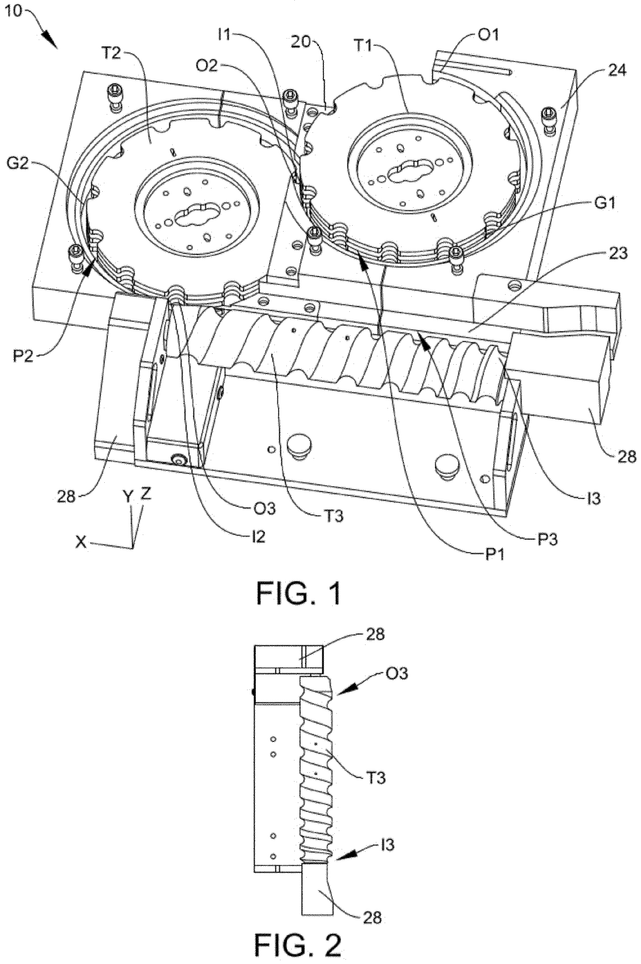

Fig. 1 shows a feed mechanism 10 according to an embodiment of the present invention. Further, a coordinate system is depicted. The coordinate system defines a X-direction, a Y-direction and a Z-direction. The coordinate system as shown in Fig. 1 is fixed in the context of the present invention and its Figures. The Y-direction extends along a direction of gravity. The feed mechanism 10 comprises a first transport element T1, a second transport element T2 and a third transport element T3. The first transport element T1 transports the containers 11 along a first path P1, the second transport element T2 transports the containers 11 along a second path P2, and the third transport element T3 moves the containers 11 along a third path P3. Alternatively, fewer or more transport elements are possible. The first path P1 comprises a first infeed position I1 and a first outfeed position O1. The second path P2 comprises a second infeed position I2 and a second outfeed position O2. The third path P3 comprises a third infeed position I3 and a third outfeed position O3. The infeed positions I1, I2 and I3 are characterized in that the containers 11 are picked up by the respective transport elements T1, T2, T3. The outfeed positions O1, O2 and O3 are characterized in that the containers 11 are discharged from the respective transport elements T1, T2, T3. The first infeed position I1, and the second outfeed position O2 and the second infeed position I2 and the third outfeed position O3 overlap each other at least partially. This allows the containers 11 to be passed from one transport element to the other one. In other words, in an operating direction the first transport element T1 is arranged after (i.e., downstream of) the second transport element T2 and the second transport element T2 is arranged after (i.e., downstream of) the third transport element T3. The operating direction is the direction along which the containers are transported from an upstream side to a downstream side of the device. The third transport element T3 comprises a screw element. The second transport element T2 and the first transport element T1 each comprise a wheel element (i.e., a star wheel). The screw element and the wheel element are each suitable for implementing a clocked movement. Other elements that fulfill this function may be suitable as transport elements. As an alternative to the screw element, other elements may be possible or may be used, which are suitable for transporting the containers in a clocked manner in a linear direction. The screw element is configured as a threaded screw and is shown in more detail in Fig. 2. The screw element transports the containers 11 through a thread along a linear direction. In other words, the first path P1 is a linear path. The first path extends in X-direction (see Fig. 1). The thread of the screw element comprises an increasing thread gradient, wherein the thread gradient increases in the operating direction. This allows several containers 11 to be picked up quickly one after the other and the spacing of the containers 11 to be adjusted. The screw element is arranged between two retaining elements 28. The screw element is mounted between the retaining elements 28 so that it can rotate about its center longitudinal axis. The screw element is connectable to a drive via one of the retaining elements 28. In other words, the retaining elements 28 comprises an interface via which screw element can be connected to a drive.

The third transport element T3 has a third guiding structure G3. The third guiding structure G3 has a boundary element 23 that extends parallel to the transport direction of the containers 11 while being moved via the third transport element T3. The boundary element 23 is designed as a wall, but may alternatively be design as a rail, for example. The boundary element 23 helps to hold the containers 11 in the thread of the screw element.

The screw element is arranged upstream of the second transport element T2 in the transport direction. At the third infeed position I3 of the third path P3, the containers 11 are handed off to the screw element of the third transport element T3 and at the third outfeed position O3, the containers 11 are discharged from the screw element. More precisely, the containers 11 are moved in an X-direction by the screw element (see Fig. 1). This means that the X-coordinates of the containers 11 change between the third infeed position I3 and the third outfeed position O3, while the Y- and Z-coordinates remain constant.

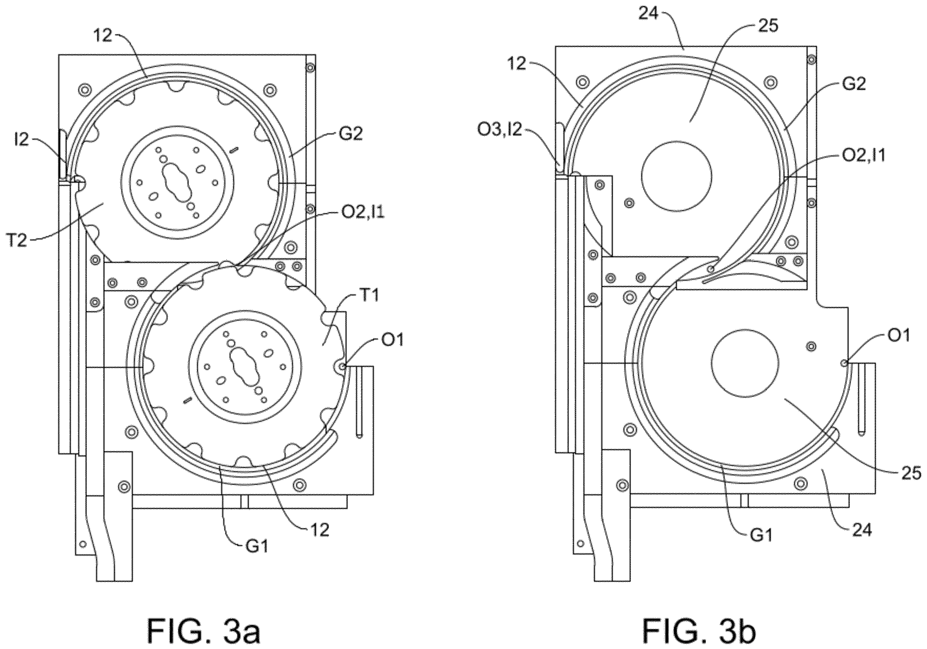

As described above, the second transport element T2 comprises the wheel element. The wheel element is shown in more detail in Fig. 3. The wheel element can also be referred to as a star wheel. The wheel element may be described as a type of transport wheel or transport disc. The wheel element of the second transport element T2 has an annular geometry. More specifically, the wheel element comprises a ring-shaped geometry. The wheel element of the second transport element T2 comprises holding regions 20. The holding regions 20 are arranged along the outer circumference of the wheel element. The wheel element of the second transport element T2 comprises twelve holding regions 20. The holding regions 20 comprise recesses. The recesses are essentially semicircular and arranged at equal distances from one another in a circumferential direction of the wheel element. The recesses can also have other shapes and can be arranged at other distances from one another. The holding elements are configured to receive and transport the containers 11 along the second path P2. The second path P2 can thus be described as a circular path. The holding elements 20 may also comprise protrusions or other shapes to hold the containers 11 while moving the containers along the second path P2.

At the third outfeed position O3, the third transport element T3 (the screw element) transfers the containers 11 to the second transport element T2 (wheel element). At the third outfeed position O3 of the third transport element T3 is the second infeed position I2 of the second path P2 of the second transport element T2. In other words, the third outfeed position O3 and the second infeed position I2 overlap. The holding regions 20 or the recesses of the wheel element of the second transport element T2 partially enclose the containers 11 in a radial direction of the second transport element T2 by a second guiding structure G2. In operation, the containers 11 are arranged in the recesses and bordered by the second guiding structure G2 and the second transport element T2. The second guiding structure G2 defines the second path P2. More precisely, the second path P2 is a circular path. The first transport element T1 is similar to the second transport element T2. This means that the first transport element T1 is configured as a wheel element identical in construction to the wheel element of the second transport element T2. However, there are embodiments possible in which this is not the case. The first guiding structure G1 of the first transport element T1 has a circular geometry defining the first path P1. In other words, the first path P1 is a circular path. The second path P2 and the first path P1 have essentially the same length. In other words, the angle spanned between the second infeed position I2 and the second outfeed position O2 is identical or at least similar to the angle spanned between the first infeed position I1 and the first outfeed position O1. However, other embodiments with paths similar in geometry but with different lengths are not excluded.

In the present embodiment, the second path P2 and the first path P1 each spans substantially an angle about 270°. The term "substantially" is understood here to mean deviations in the range of -5% to +5%. It may be possible, that the second path P2 is different from the first path P1. The angle each path spans may depend from the desired infeed positions and outfeed positions of the respective paths. This means, that the paths define the infeed and outfeed positions of the respective transport elements.

The second guiding structure G2 of the second transport element T2 and the first guiding structure G1 of the first transport element T1 are highlighted in Fig. 3b. In a plan view, the second guiding structure G2 and the first guiding structure G1 form an S-shaped path. In other words, the second path P2 of the second transport element T2 is continued by the first path P1 of the first transport element T1. The second guiding structure G2 and the first guiding structure G1 are each formed on a block element 24. The block element 24 comprises an essentially rectangular shape, wherein one corner is left out. More precisely, the block element 24 comprises a circular recess portion 25. The circular recess portion 25 is arranged eccentric in the block element 24. The block elements 24 may be arranged on a surface, in particular may be bolted or screwed to a surface of a housing. The block elements 24 may be arranged offset to each other in a direction parallel to a longitudinal center of the circular recess portions 25. With reference to Fig. 1, the block elements 24 are arranged offset to each other in a Y-direction.

The second transport element T2 and the first transport element T1 are illustrated in Fig. 3a in more detail. The wheel element of the first transport element T1 is arranged tangentially to the wheel element of the second transport element T2. The tangential point of the second transport element T2 and the first transport element T1 is located at the second outfeed position O2 of the second transport element T2 and the first infeed position I1 of the first transport element T1. In an assembled state, the wheel elements of the second transport element T2 and the first transport element T1 are arranged in the respective circular recess portions 25 of the block elements 24. The circular recess portion 25 may comprise a through hole to connect the transport elements to a drive mechanism.

The second guiding structure G2 and the first guiding structure G1 each comprise a ramp 12. The ramp 12 comprises an inclination. The ramp 12 of the second guiding structure G2 and the first guiding structure G1 comprises a helical geometry. With reference to Fig. 1, the inclination of the ramp 12 has a gradient in Y-direction. The ramp 12 is integrated into the second guiding structure G2 and the first guiding structure G1. The containers 11 are in contact with the ramp 12 during transport. For example, the containers 11 are in contact with the ramp 12 via a surface, in particular via a bottom surface, of the containers 11. In other words, the containers 11 slide on the ramp 12 during transport along the second path P2 and the first path P1. For this purpose, the ramp 12 may have a friction-reducing surface. This may be a special material or a coating for example. It may be possible, that the second guiding structure G2 and/or the first guiding structure G1 comprise the ramp 12. The ramp 12 is designed such that the containers 11 change a spatial coordinate during transport. With respect to Fig. 3a, the containers change position in the direction out of the drawing plane. With reference to Fig. 1, the containers 11 change position in a Y-direction during transport via the second transport element T2 and the first transport element T1. The change in the position of the container in a Y-direction can also be described as a change in height or in vertical direction. The containers 11 are moved by the second guiding structure G2 of the second transport element T2 and the first guiding structure G1 of the first transport element as follows: The containers 11 are moved along the circular second path P2 and the circular first path P1 of the respective guiding structure. That means, with reference to Fig. 1, the containers 11 are moved in a X-direction and a Z-direction simultaneously. Additionally, as described above, the containers 11 glide along the ramp 12. The ramp 12 has an inclination with a slope in a Y-direction. Consequently, the ramp 12 allows the containers 11 to change position in a Y-direction (i.e., a vertical direction and direction of gravity in an operational state of the device). In a possible operation position, the feeding device 10 may be arranged or oriented such that, during operation of the feeding device 10, the containers 11 may change their position in a direction parallel to the direction of gravity when travelling along the second path P2 and the first path P1.

The third guiding structure G3 of the third transport element T3 (screw element) or the third path P3 does not comprise a ramp in the illustrated embodiment. However, an embodiment may be possible, in which the third guiding structure comprises the ramp. The ramp may be arranged next to the screw element and in a direction parallel to the screw element. The ramp may be oriented in such a way that at least two spatial coordinates of the containers 11 change. More precisely, with reference to Fig. 1, the containers 11 may be moved via the first transport element T1 in a X-direction and Y-direction. It is further possible that the ramp 12 has a bend in a Z-direction so that, the containers 11 are displaced in such a way that three spatial coordinates of the containers 11 are changed. In other words, the containers are moved in a X-direction, a Y-direction and a Z-direction. It should be noted herewith that the ramp mentioned in relation to the third transport element T3 is not shown in the Figures and should be understood as another possible embodiment. Furthermore, embodiments are possible that comprise one or more transport elements, wherein each transport element comprises a wheel element. Alternatively, an embodiment is possible that comprises a transport element configured as a screw element and one or more further transport elements configured as a wheel element. Embodiments comprising several transport elements configured as screw elements are also not excluded.

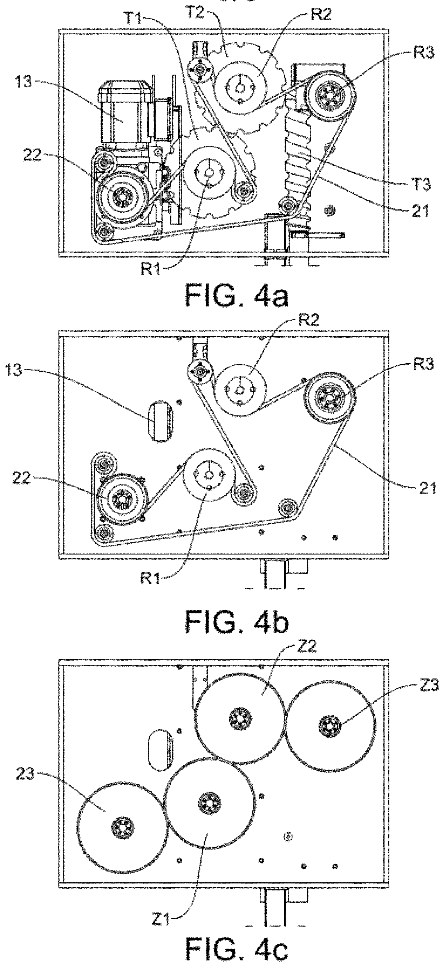

Fig. 4a, 4b and 4c each shows a schematic view of the drive mechanism of the feeding device 10. As illustrated in Fig. 4a, the feeding device 10 comprises a motor 13. The motor 13 is preferably an electric motor. Other suitable motor types can also be used. The feeding device 10 preferably comprises a single motor 13 which drives all components of the feeding device 10 to be driven, in particular the transport elements and a conveyor device 15 to which the transported containers 11 are transferred or handed off. This makes it possible to synchronize the individual components of the feeding device 10, in particular the transport elements and/or the conveyor device 15. Alternatively, the feeding device may comprise multiple motors. These components must be linked together to synchronize the handoff between the transport elements, for example the third transport element T3 (screw element) and the second transport element T2 (wheel element). This may also help to synchronize the hand off between the transport elements and the conveyor device 15, for example the first transport element T1 (wheel element) and the conveyor device 15. The conveyor device 51 may also be mechanically coupled to the at least one of the transport elements. Figures 4b and 4c each shows a view of the drive mechanism. The individual transport elements are connected to one another by a belt-pulley assembly comprising a belt 21 and multiple pulleys. Fig. 4a additionally shows the motor 13 and the transport elements T1, T2 and T3. Fig. 4c shows an embodiment of the feeding device 10, wherein the drive mechanism comprises a gear assembly with four gears.

In Fig. 4b it can be seen that a drive pulley 22 is arranged at the motor 13. The drive pulley 22 is connected to a third pulley R3 via three deflection pulleys by the belt 21. The third pulley R3 is used to drive the third transport element T3. The third pulley R3 is directly connected to the second pulley R2. The second pulley R2 is associated with the second transport element T2. The second transport element T2 is connected to the first pulley R1 via two deflection pulleys. The first pulley R1 is used to drive the first transport element T1. From the first pulley R1, the belt 21 is connected to the drive pulley 22. The third pulley R3, the second pulley two and the first pulley R1 are idle pulleys that are driven by the drive pulley 22 of the motor. As an alternative to the pulley arrangement described above, other arrangements and combinations may be possible. The diameters of the first, second and third pulleys R, R2, R3 and idle pulley are selected so that the first, second and third transport elements T1, T2, T3 are synchronized i.e., the transport elements T1, T2, T3 operate in a synchronized manner.

In Fig. 4C, the motor 13 has a drive gear 23. The drive gear 23 is coupled to a first gear wheel Z1. The first gear wheel Z1 is used to drive the first transport element T1. The first gear wheel Z1 is coupled to a second gear wheel Z2. The second gear wheel Z2 is coupled to the second transport element T2. The second gear wheel Z2 is coupled to a third gear wheel Z3. The third gear wheel Z3 is for driving the third transport element T3. The third gear wheel Z3, the second gear wheel Z2 and the first gear wheel Z1 have the same diameter. Due to the common diameter, the transport elements are synchronized. This means that the speeds of the transport elements are coordinated with each other. This in turn is important to ensure smooth operation of the feeding device 10. Alternatively, a different arrangement of the gears is possible if necessary. A belt-pulley assembly with idle pulleys may be cost effective possibility to link the transport elements together. The gear assembly is a further way to better link the transport elements together with better friction characteristics and reduced backlash throughout. Furthermore, a combination of the drive mechanisms described above may also be possible.

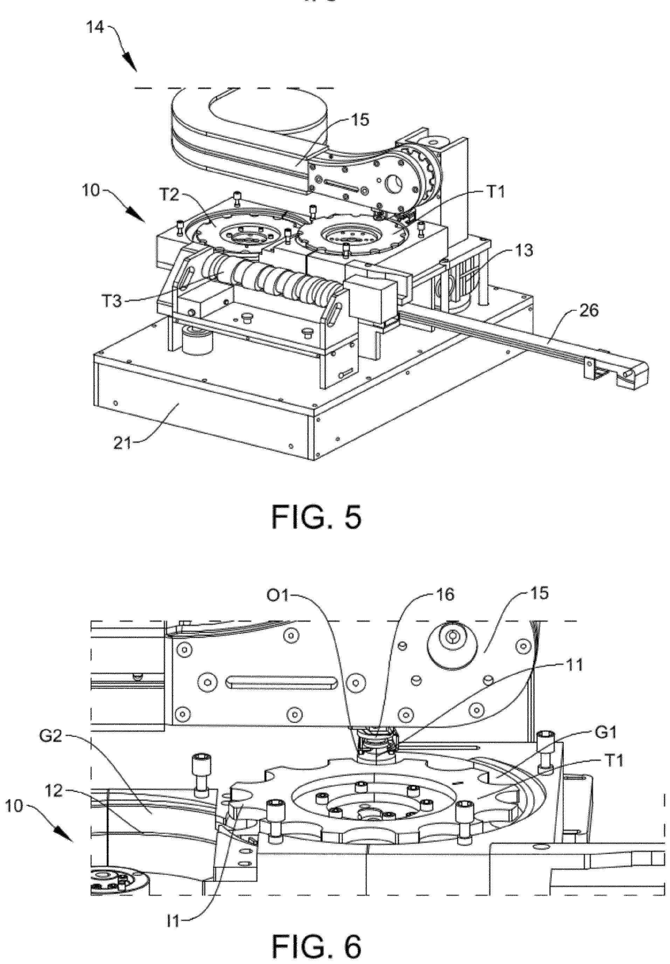

Fig. 5 shows a conveyor system 14 including a feeding device 10. The feeding device 10 corresponds to the feeding device 10 shown in Fig. 1. The conveyor system 14 includes a flat belt conveyor 26. The flat belt conveyor 26 transports the containers 11 to the feeding device 10. It is also possible that the containers 11 are taken from a container nest. The flat belt conveyor 26 transports the containers 11 to the third transport element T3. The third transport element T3 is designed as screw element. The flat belt conveyor 26 transports the containers 11 into the third guiding structure G3. In the third guiding structure G3 of the third transport element T3, the containers 11 are transported along the third path P3 by the thread of the screw element. At the axial end of the screw element facing the flat belt conveyor 26, the thread of the screw element has a smaller pitch than at the opposite axial end. At the third infeed position I3, the containers 11 are passed from the flat belt conveyor 26 to the screw element of the third transport element T3. Subsequently, the containers 11 are then transported along the third path P3 in a linear direction from the third infeed position I3 to the third outfeed position O3.

At the third outfeed position O3, the containers 11 are transferred to the second infeed position I2 of the second transport element T2. The second transport element T2 is designed as wheel element. The containers 11 are arranged or inserted in the recesses of the wheel element of the second transport element T2 at the second infeed position I2. Subsequently, the containers 11 are transported along the second path P2 from the second infeed position I2 to the second outfeed position O2. The second path P2 has a circular geometry. During transport along the second path P2, the containers 11 are moved along the second guiding structure G2. The ramp 12 of the second guiding structure G2 causes the position of the containers 11 to be shifted between the second infeed position I2 and the second outfeed position O2 in a direction parallel to the central longitudinal axis of the wheel element of the first transport element T1. The central longitudinal axis of the wheel element is to be understood as an axis passing through the center point of an annular surface of the wheel element.

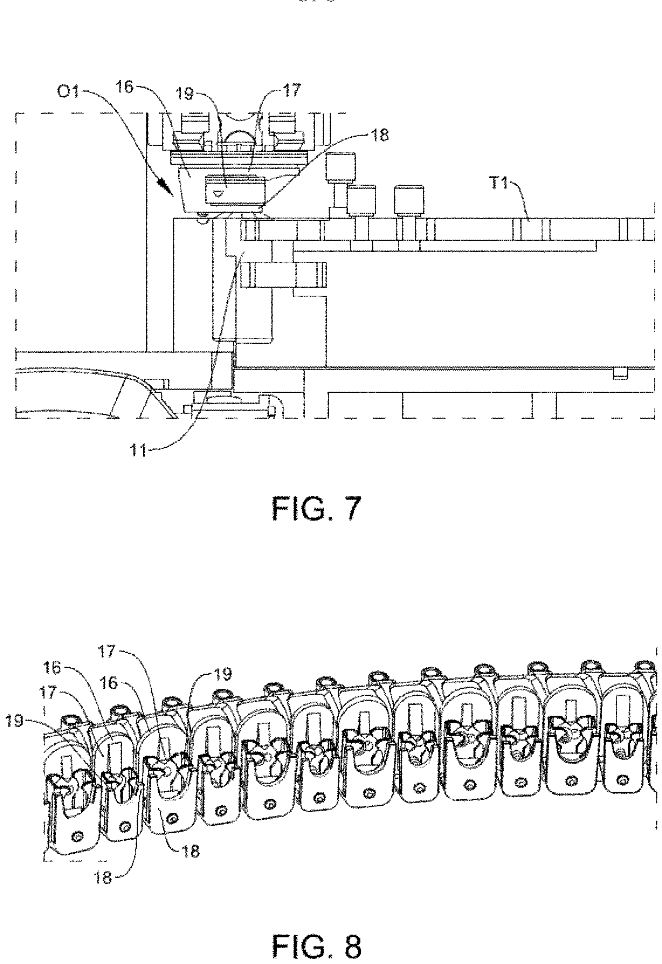

The containers 11 are moved in such a way that three spatial coordinates of the containers 11 change on the second path P2 between the second infeed position I2 and the second outfeed position O2. In other words, the containers 11 are moved in X-, Y- and Z-direction. In particular, the containers 11 are displaced in relation to the wheel element of the second transport element T2 in such a way that they protrude from the recess of the wheel element of the second transport element T2 at the outfeed position O2. At the second outfeed position O2 of the second transport element T2, the containers 11 are transferred to the first infeed position I1 of the first transport element T1. The first transport element T1 is designed as wheel element. The wheel element is arranged offset in a direction parallel to the central longitudinal axis of the second transport element T2. This is advantageous in order to more easily pick up the containers 11 displaced in a direction parallel to the longitudinal center axis of the second transport element T2. Furthermore, the second transport element T2 and the first transport element T1 are arranged substantially tangentially. That is, the second transport element T2 and the first transport element T1 substantially overlap at a point. Here, the term "substantially" is understood here to mean deviations in the range of -5% to +5%. The first transport element T1 receives the containers 11 in the recesses 20. The containers 11 are transported on the first path P1 along a circular path from the first infeed position I1 to the first outfeed position O1. In the process, the containers 11 are displaced by the ramp 12 of the first guiding structure G1 in a direction parallel to the longitudinal axis of the first transport element T1. At the first outfeed position O1, the containers 11 protrude from the recesses of the wheel element of the first transport element T1. At the first outfeed position, the containers 11 are gripped at the protruding area of the containers 11 by a gripping device 16 of the conveyor device 15 and may be further transported. The gripping device 16 comprises a support element 18 to support the container 11 and a flexible element 19 to grab the container 11. The gripping device 16 is configured to passively grab the containers 11 from an outfeed position O. The first outfeed position O1, where the containers 11 are transferred to the gripping device 16, is shown in detail in Fig. 6 and Fig. 7. The gripping device 16 is arranged adjacent to the first transport element T1 in such a way that the containers 11 are pushed into the gripping device 16, preferably in a passive manner, and transported further in a tangential direction. The containers 11 may be pushed into the gripping device 16 by a release element. The release element may be a protrusion which uses the motion of the containers 11 to push the containers 11 in the gripping device 16.

The wheel element shown in Fig. 6 has larger recesses and a smaller ring diameter than the previously described wheel elements. This allows to pick up larger containers. Due to the protruding areas of containers 11 from the wheel element of the first transport element T1, the containers 11 can be picked up more easily by the gripping device16. In Fig. 6, the second transport element T2 is blanked out. Consequently, the second guiding structure G2 is clearly visible. In particular, the ramp 12 and its gradient along the second guiding structure G2 are visible. The ramp 12 of the second guiding structure G2 rises in a clockwise direction. As the wheel element of the first transport element T1 moves in the opposite direction to the wheel element of the second transport element T2, the first guiding structure G1 is configured in the opposite direction to the second guiding structure G2. This means that the ramp 12 of the first guiding structure G1 rises in a counterclockwise direction.

Fig. 7 shows a detailed side view of the first outfeed position O1 according to Fig. 6. In the first outfeed position O1 of the first transport element T1, the containers 11 are transferred to the gripping device 16.

Fig. 8 shows several gripping devices 16 coupled together. More specifically, Fig. 8 shows two types of gripping devices arranged alternately side by side. The two different types of gripping device 16 are each designed to pick up different types of containers 11. The gripping devices 16 are intended to be connected or arranged with a transport device. The gripping devices 16 shown are intended to be arranged at the outfeed position O of a transport element T in such a way that the containers 11 can be passively picked up by the gripping devices 16.

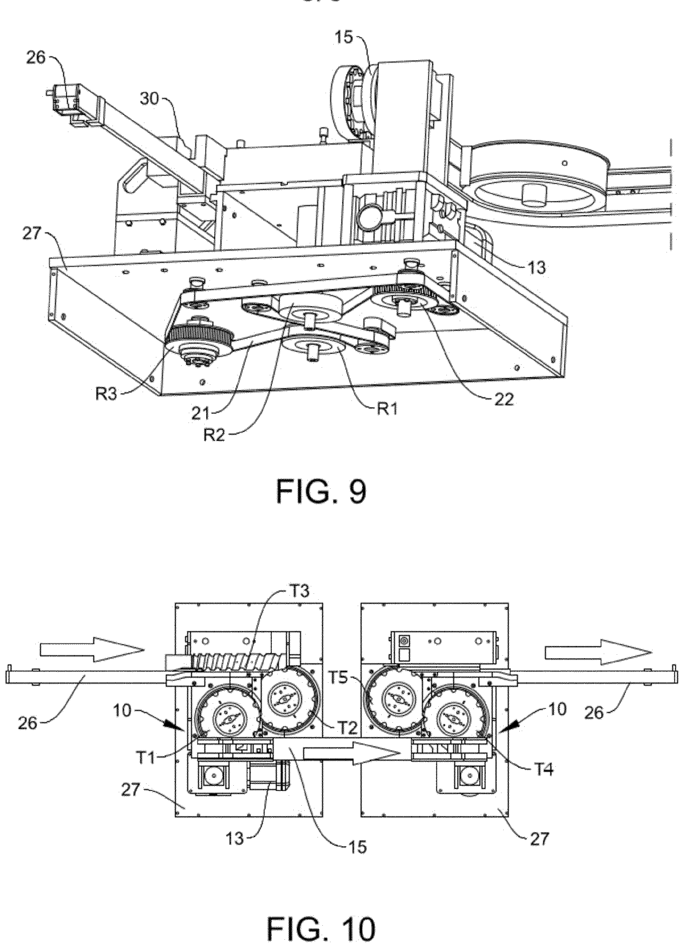

Fig. 9 shows a perspective bottom view of the system according to Fig. 5. Fig. 9 shows that the feeding device 10 is mounted on a housing 27. The drive mechanism for the transport elements of the feeding device 10 is arranged in the housing. The drive mechanism shown in Fig. 9 is essentially the same belt-pulley assembly as illustrated in Fig. 4a and Fig. 4b. A possible method to feed containers 11 to the conveyor device 15 may comprise the following steps: providing containers 11; feeding the containers 11 to at least a third transport element T3; transporting the containers 11 along a third path P3 of the third transport element T3; during the transport along the third path P3, displacing the containers 11 so that at least two spatial coordinates of the containers 11 change.

Fig. 10 shows another possible use of the feeding device 10 based on an exemplary embodiment. Fig. 10 shows a system in which two feeding devices 10 are arranged in series on after another. The feeding device 10 arranged in the operating direction before the other feeding device 10 is described as the first feeding device. The feeding device 10 arranged in the operating direction after the first feeding device 10 is the second feeding device. The first feeding device 10 corresponds with the above-described feeding device 10 and comprises the third transport element T3 with a screw element, a second transport element T2 with a wheel element and a first transport element T1 with a wheel element. The first feeding device 10 is substantially the same as the feeding device 10 illustrated in Fig. 1. The two feeding devices 10 are arranged in series one after the other. The two feeding devices 10 are connected by the conveyor device 15 with the gripping devices 16. The gripping devices 16 corresponds substantially to the gripping devices 16 described above. The containers 11 pass through the first feeding device 10 as described for Fig. 5 at the third infeed position I3, the containers 11 are picked up by the third transport element T3 with a screw element and transported via the third path P3 to the third outfeed position O3 i.e., to the second transport element T2. At the second infeed position I2, the containers 11 are picked up by the second transport element T2 and transported via the second path P2 to the second outfeed position O2 i.e., to the first transport element T1. At the first infeed position I1, the containers 11 are picked up by the first transport element T1 and transported via the first path P1 to the first outfeed position O1 i.e., to the transporter device with the gripping elements16. The containers 11 are transported from the third feeding device via the transport device with the gripping elements 16 to the second feeding device. The second feeding device comprises two transport elements. These are a fourth transport element T4 and a fifth transport element T5, each comprising wheel elements. the fourth transport element T4 and the fifth transport element T5 correspond in their structure to the second transport element T2 and the first transport element T1, respectively. The fourth transport element T4 has a fourth infeed position I4 and a fourth outfeed position O4. The fifth transport element T5 has a fifth infeed position I5 and a fifth outfeed position O5.

The containers 11 are disengaged from the gripping devices 16 at the fourth infeed position I4 by the wheel element of the fourth transport element T4. The containers 11 are then transported along a fourth path P4 of a fourth guiding structure G4 of the fourth transport element T4 from the fourth infeed position I4 to the fourth outfeed position O4. At the fourth outfeed position O4, the containers 11 are transferred to the fifth transport element T5 via the fifth infeed position I5. Subsequently, the containers 11 are transported via a fifth path P5 of a fifth guiding structure G5 of the fifth transport element T5 from the fifth infeed position I5 to the fifth outfeed position O5. At the fifth outfeed position O5, the containers 11 are transferred to a flat belt conveyor.

In a preferred embodiment of the present invention, the feeding device may comprise a feeding screw (screw element) or star wheel (wheel element) prior to the conveyor device 15 with guides that control the height and pitch of each container size. Only one of these features is absolutely required for functionality. The product incoming (i.e., the container delivery) is at a common height on the bottom of the container, and the container clip chain must have the common height at the neck of the container (i.e., the position at which the containers a gripped by the gripping device). The reason to move the container 11 up to a specific height is to make sure that, for example, clip fingers of the gripping device 16 are arranged around the neck of the container 11, and not the more sensitive cap.

If the height of the containers 11 does not need to change, the pitch of the incoming containers 11 still may have to be controlled. Incoming containers 11 are, for example, on the flat belt conveyor 26 with the containers 11 touching each other so the pitch or distance of the containers 11 to each other corresponds to the outside diameter of the containers 11. With either an infeed screw or a (cleaving) star wheel, the pitch is set to the same pitch of the container device 15. The containers 11 are then pushed into the handoff point whereby either the feeding screw or star wheel push the containers 11 into the gripping device 16. The round container neck opens the gripping devices 16 passively, and a spring holds the clips in the closed position once the containers are in place. The pitch setting infeed screw or star wheel are mechanically linked to the drive end or idle end of the plastic chain conveyor. These components must be linked together to make the handoff between screw or star wheel and the chain conveyor in sync with each other. The system may be driven by an electric motor once the components are timed in sync with each other. The feed screw or star wheel prior to the conveyor device 15 with guides that control the height and pitch of each container size. Only one of these features is absolutely required for functionality. The star wheel has the advantage of being easier and cheaper to manufacture. The star wheel in the system allows outfeed direction to change to almost any angle simply by pulling containers 11 out of the star wheel at various angles relative to infeed position. Incorporating an infeed screw into the system is best for increasing speed of the whole system. Compared to a cleaving star wheel, an infeed screw pitches the containers 11 much smoother and less abruptly, allowing the containers 11 to ramp up in speed to get to the correct outfeed pitch from the infeed pitch. The best solution is to have both an infeed screw and star wheels to get the features of both. To compensate for container height changes, the helical ramp 12 is included in the guiding structures around the star wheels which move the reference surface from the bottom while on a flat belt conveyor 26 to the top when held by the gripping devices 16 of the conveyor device (flighted conveyor). The containers 11 gently travel uphill to get to the desired height before insertion into the gripping device 16 of the conveyor device 15.

The feed screw, star wheel, and guide components are changeable parts specific to each physical container size. Change tooling is precisely located to the base and held down firmly but easily. Each set of tooling will bring different outside diameter and different height products to common center point, pitch, and neck height so the clip chain container conveyor doesn't need to be changed out or have change tooling associated with different container sizes. For basic functionality, the pitch setting feed screw or star wheel on the drive end are driven by one motor13. The container 11 can be pushed out of the gripping elements 16 on the chain conveyor with a simple wedge at the outfeed. To better maintain container control on the outfeed, the same or similar assembly to the infeed may be implemented on the outfeed with height change star wheels and guiding structure. Over short distances, the plastic chain container conveyor mechanically links the timing of both infeed and outfeed with only one drive motor. On long runs an additional servo motor can be added at the idle end and electronically matched to the drive motor to reduce stress on the conveyor chain. Timing is mechanically linked between the pitching device and conveyor flights at the drive end and possibly the other end as well. A belt with idle pulleys is usually adequate, but the system is designed to alternatively use a geartrain to better link the components together with better friction characteristics and reduced backlash throughout.
In a preferred embodiment, the conveyor system may also be described as a non-contact clip chain container conveyor. The non-contact clip chain container conveyor is a plastic flexible link style chain conveyor with integrated gripping devices 16 which transports vials, bottles, or similar containers 11 individually in three dimensions. It provides a means to transport over and around obstacles without letting go of the containers 11. During transportation in this chain conveyor, containers 11 do not contact each other. The chain conveyor is mechanically linked to the feeding device 10 which may be fed by a horizontal flat belt conveyor 26. It can have an outfeed that places containers 11 back onto an outfeed horizontal flat belt.

Another feature that makes it possible for successfully transporting containers 11 is the plastic chain conveyor with the integrated gripping device with spring-operated grippers which can bend in three dimensions. Springs and flight grippers provide a controlled holding force to gently hold the containers 11 during transport. The spring feature is integrated without the need for additional fasteners. Because of the gripping device, guides along the conveyor are not required to maintain control of the containers 11. The gripping device 16 passively holds a container 11 at the neck and are compliant to a range of container diameters without change parts along the conveyor. The containers 11 must have a similar neck diameter throughout size range, or at least groups of neck diameters. The location where the gripping device 16 contacts the container 11 is away from sensitive surfaces, in particular of the cap and allows for various container cap designs. Because the containers 11 likely contain a liquid, the containers 11 may be heavy. The weight of the containers 11 is supported by a stationary component or a support element of the gripping device 16, not the moving spring fingers. The clip chain with the gripping devices 16 can be on the bottom or the side of a conveyor strand (extrusion). One advantage of the plastic chain, the plastic chain can be implemented to expand the range of compatible container sizes by installing a different sized gripping device 16 on every other chain link. In this way, the conveyor system is able to grip different groups of neck sizes of containers without the need to change the chain link itself.

Other variations to the disclosed example can be understood and effected by those skilled in the art in practicing the claimed subject matter, from the study of the drawings, the disclosure, and the dependent claims. In particular, respective parts/functions of the respective example described above may also be combined with each other. In the claims, the word "comprising" does not exclude other elements or steps and the indefinite article "a" or "an" does not exclude a plurality.

The mere fact that certain measures are recited in mutually different dependent claims does not indicate that a combination of these measures cannot be used to advantage. Notably, in particular, any steps presented can be performed in any order, i.e., the present invention is not limited to a specific order of these steps. Any reference signs in the claims should not be construed as limiting the scope of the claims.

### Reference numerals:

- G1: first guiding structure
- G2: second guiding structure
- G3: third guiding structure
- I1: first infeed position
- I2: second infeed position
- I3: third infeed position
- O1: first outfeed position
- O2: second outfeed position
- O3: third outfeed position
- P1: first path
- P2: second path
- P3: third path
- T1: first transport element
- T2: second transport element
- T3: third transport element
- 10: feeding device
- 11: container
- 12: ramp
- 13: motor
- 14: conveyor system
- 15: conveyor device
- 16: gripping device
- 17: holding portion
- 18: support element
- 19: flexible element
- 20: holding element
- 21: belt
- 22: drive pulley
- 23: drive gear
- 24: block element
- 25: circular recess portions
- 26: flat belt conveyor
- 27: housing
- 28: retaining elements
- 29: holding element

## Claims

1. A feeding device (10) for feeding at least one container (11), in particular for feeding at least one container (11) to a conveyor device, comprising:
a first transport element (T1) configured to transport the container (11) along a first path (P1) from a first infeed position (11) to a first outfeed position (O1); and
a first guiding structure (G1) configured to guide the container (11) along the first path (P1) from the first infeed position (11) to the first outfeed position (O1), while the container (11) is transported by the first transport element (T1);
wherein the first guiding structure (G1) comprises a ramp (12) with an inclination so that during transport along the first path (P1) at least two spatial coordinates of the container (11) change between the first infeed position (11) and the first outfeed position (O1).

2. The feeding device (10) according to claim 1, wherein the ramp (12) has an inclination so that three spatial coordinates of the container (11) between the first infeed position (I1) and the first outfeed position (O1) change during transport along the first path (P1).

3. The feeding device (10) according to claim 1 or 2, wherein the feeding device comprises:
a second transport element (T2) configured to transport the container (11) along a second path (P2) from a second infeed position (I2) to a second outfeed position (O2), wherein the second transport element (T2) is arranged such that the first path (P1) and the second path (P2) are continuous, in particular connected to each other.

4. The feeding device (10) according to claim 3, wherein the feeding device (10) comprises:
a second guiding structure (G2) configured to guide the container (11) along the second path (P2) from the second infeed position (I2) to the second outfeed position (O2); wherein
the second guiding structure (G2) comprises a ramp (12) with an inclination so that during transport along the second path (P2) at least two spatial coordinates or three spatial coordinates of the container (11) change between the second infeed position (I2) and the second outfeed position (O2).

5. The feeding device (10) according to claim 3 or 4, wherein, in an operation position of the feeding device (10), the second infeed position (I2) of the second transport element (T2) is arranged lower in a vertical direction than the first outfeed position (O1) of the first transport element (T1).

6. The feeding device (10) according to any one of the claims 3 to 5, wherein the first transport element (T1) and the second transport element (T2) are a star wheel.

7. The feeding device (10) according to claims 3 to 6, further comprising a third transport element (T3) configured to transport the container (11) along a third path (P3) from a third infeed position (I3) to a third outfeed position (O3), wherein the third transport element (T3) is arranged such that the first path (P1) the second path (P2) and the third path (P3) are continuous, in particular connected to each other.

8. The feeding device (10) according to claim 7, wherein the third transport element (T3) is a screw element.

9. The feeding device (10) according to any one of claims 3 to 8, wherein the first path (P1) and the second path (P2) are circular paths, wherein the first path (P1) and second path (P2) are connected so that the two paths (P1, P2) form an S-shaped path.

10. The feeding device (10) according to any one of the claims 3 to 9, wherein the first transport element (T1) and the second transport element (T2) are driven by a single motor (13), in particular an electric motor.

11. The feeding device (10) according to any one of the claims 3 to 10, wherein the first transport element (T1) and the second transport element (T2) are linked to each other by a drive mechanism, in particular a belt-pulley assembly or by a gear assembly or by a combination of both.

12. A conveyor system (14) for transporting containers (11), comprising a feeding device (10) according to any one of the preceding claims and a conveyor device (15), wherein the feeding device (10) is configured and arranged to hand off the containers (11) to the conveyor device (15).

13. The conveyor system (14) according to claim 12, wherein the conveyor device (15) comprises a gripping device (16), wherein the gripping device (16) comprises:
a support element (18) configured to support the container (11), and
a flexible element (19) configured to grab the container (11).

14. A method for feeding at least one container to a conveyor device (15) comprising the following steps:
moving at least one container (11) from a first infeed position (11) to a first outfeed position (O1) along a first path (P1);
while moving the container (11) along the first path (P1), adjusting the position of the container (11) so as to change at least two spatial coordinates or three spatial coordinates of the at least one container (11); and
handing off the container (11) at the first outfeed position (O1), in particular to the conveyor device (15).

15. The method according to claim 14, further comprising the step:
moving at least one container (11) from a second infeed position (I2) to a second outfeed position (O2) along a second path (P2);
handing over the container at the second outfeed position (O2) to the first transport element (T2);
while moving the containers (11) along the second path (P2), adjusting the position of the container (11) so as to change at least two spatial coordinates or three coordinate of the container. (11)
